# EUROPEAN PATENT SPECIFICATION

(11) **EP 4 389 983 B1**
(45) Date of publication and mention of the grant of the patent: **21.05.2025**
(21) Application number: 23219199.9
(22) Date of filing: 21.12.2023
(51) Int. Cl.: E01H 1/05, B60L 15/00, E01H 1/08

(54) **SWEEPER MACHINE**
KEHRMASCHINE
BALAYEUSE

(30) Priority: 22.12.2022 IT 202200026487
(43) Date of publication of application: 26.06.2024
(73) Proprietor: Tenax International S.r.l., 42010 Rio Saliceto (RE) (IT)
(72) Inventor: GUARESCHI GEDDES DA FILICAIA, Vincenzo, 43123 Parma PR (IT)
(74) Representative: Lunati & Mazzoni S.r.L.

(56) References cited:
- CN-A- 103 306 229
- CN-U- 205 501 902
- US-A1- 2022 069 757

## Description

The present invention relates to a sweeper machine of the type specified in the preamble of the first claim, as described in CN103306229A.

The subject of the present invention is a sweeper machine which can be applied in the maintenance of roads and rolling spaces and in particular for cleaning the roads. Currently, road sweeper machines are known suitable to remove debris, leaves and small waste lying on the road surface, which can constitute a potential risk for the road safety, since they reduce the adherence of the tyres of the circulating vehicles. The sweeper machines are road vehicles, equipped with a cockpit for driving by an operator, equipped with arms provided with rotating brushes, capable of sweeping the waste collected along the way of the sweeper machine and to convey it towards an area below the vehicle to address it to a collecting apparatus, which sucks the collected waste inside a tank, depending upon the selected solution.

In particular, the sweeper machines with electric motor have the advantage of allowing to reduce the sizes of the vehicle, thanks to the compact sizes of the electric motor, which allows using the sweeper machine in narrower roads, such as for example in the old town areas.

The electric motor has the advantage of eliminating CO₂ emissions, as well as removing vehicle noises during use, solution which reduces the sound disturbance and/or the acoustic pressure, especially during the night hours.

The road sweeper machines with electric motor further require a reduced maintenance.

The electric batteries allow a vehicle autonomy compatible with the use of at least one work shift.

The described known art comprises some important drawbacks.

In particular, a drawback of this solution consists in that in order to be able to install a more powerful electric motor it is necessary to opt for solutions involving larger dimensions of the motor or of the cables.

Moreover, the traditional solutions to increase the power require greater electric voltages to be able to reduce currents, with consequent increase in costs of materials and consequent need for suitable techniques and training of specialized personnel for installation, motion and maintenance of battery and command and control elements.

In this situation the technical task underlying the present invention is to devise a sweeper machine capable of substantially obviating at least partially the mentioned drawbacks.

Within said technical task an important object of the invention is to obtain a sweeper machine having an electric motor having high power and reduced dimensions.

Another important object of the invention is to implement a sweeper machine the motor thereof does not require a complex phase for the installation on the vehicle. The technical task and the specified objects are achieved by a sweeper machine as claimed in the enclosed claim 1.

Preferred technical solutions are highlighted in the depending claims.

The features and the advantages of the invention are explained hereinafter by the detailed description of preferred embodiments of the invention, with reference to the enclosed drawings, wherein:

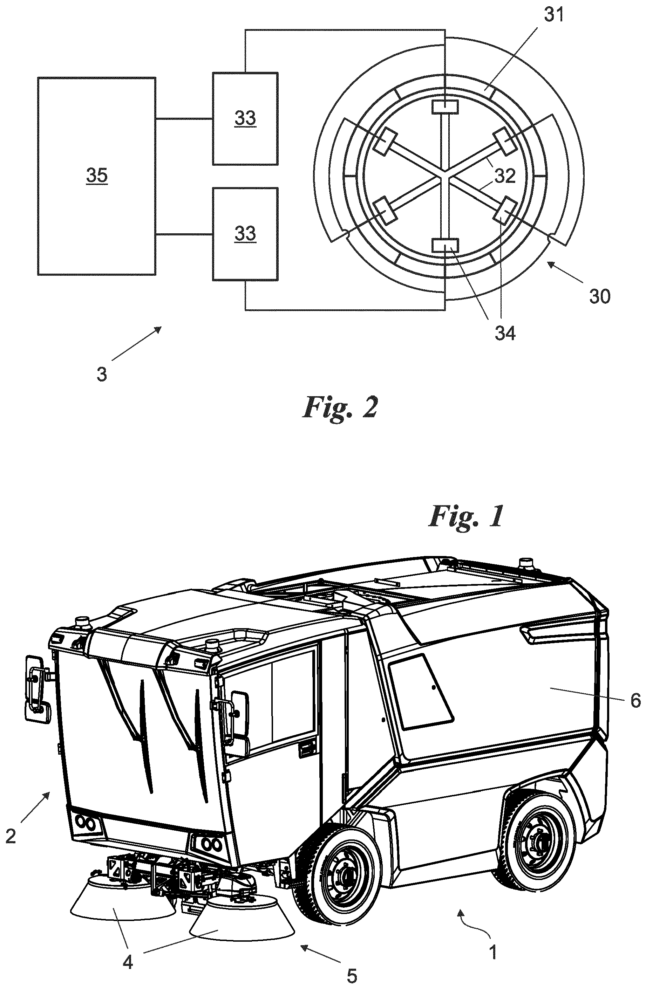

**Figure 1** shows the sweeper machine according to the invention;
**Figure 2** illustrates a possible scheme of the motor of the sweeper machine according to the invention.

In the present document, the measurements, values, shapes and geometrical references (such as perpendicularity and parallelism), when associated to words such as "about" or other similar terms such as "approximately" or "substantially", are to be meant as excluding measurements errors or inaccuracies due to production and/or manufacturing errors and, above all, excluding a slight deviation from the value, measurement, shape or geometrical reference thereto it is associated. For example, such terms, if associated to a value, preferably designate a deviation not higher than 10% of the value itself.

Moreover, when used, terms such as "first", "second", "higher", "lower", "main" and "secondary" do not identify necessarily an order, a relation priority or relative position, but they can be simply used to distinguish more clearly components different from each other.

Unless otherwise specified, as it results from the following discussions, it is considered that terms such as "treatment", "computer science", "determination", "calculation", or the like, relate to the action and/or processes of a computer or similar electronic calculation device which manipulates and/or transforms data represented as physical data, such as electronic quantities of registers of a computer system and/or memories into other data similarly represented as physical quantities within computer systems, registers or other devices for storing, transmitting or displaying information.

The measurements and data reported in the present text are to be considered, unless otherwise indicated, as performed under International Standard Atmosphere ICAO (ISO 2533:1975).

With reference to the Figures, the sweeper machine according to the invention is designated as a whole with number **1.**

The sweeper machine 1 is analogous to the known road sweeper machines.

The sweeper machine 1 comprises a vehicle **2.**

The vehicle 2 is suitable for road transport as it is known.

The vehicle 2 comprises an electric motor **3.** The electric motor 3 has the advantage of reducing the noise generated when the sweeper machine 1 is in use and this aspect is particularly advantageous when the sweeper machine 1 is used in inhabited areas or old town areas in night hours in order to not disturb nearby residents.

The sweeper machine 1 comprises sweeping elements **4.** The sweeping elements 4 typically are brushes moved mechanically, as it is known. The sweeping elements are connected to the vehicle 2 and they are suitable to remove waste present on the ground.

The sweeper machine 1 comprises a system **5** for collecting waste. The collection system 5 can be for example a system of pipes suitable to suck the waste removed from the road surface by the sweeping elements 4.

The collection system 5 is preferably placed at the bottom of the vehicle 2.

The sweeper machine 1, preferably, comprises a chamber **6** for containing the collected waste, as it is known. The chamber 6 then has the purpose of containing the collected waste, so as to remove it wholly from the roads' surface. The chamber 6 is connected to the collection system 5.

The sweeper machine 1, differently from the known sweeper machines, comprises an electric motor 3 of brushless type and comprises a hexa-phase system **30.** The electric motor 3 of brushless type is of known type.

The electric motor 3 comprises a battery **35.**

The hexa-phase system 30 comprises a rotor **31** comprising a plurality of magnets of permanent type. The rotor 31 operates analogously to the already known rotors. In particular, the permanent magnets, through the interaction with suitably controlled magnetic fields, cause the rotational motion of the rotor 31.

With respect to the known solutions, the hexa-phase system 30 comprises two stators **32.** The two stators 32, as it is known, are fixed structures with respect to the rotative motion of the rotor 31. The fact that they are two in number is meant functionally, as better specified hereinafter, and they could be structurally integrated in one single structure, but, in each case, they have mutually independent electric operation.

In the sweeper machine 1 the electric motor 3 has preferably an external rotor, wherein the rotor 31 surrounds the stators 32. In this configuration, the rotor 31 has the shape of a hollow cylinder containing inside thereof the stators 32. This configuration is similar to those having external rotor of the known brushless electric motors, then it has the advantage of simplifying the assembly as a result of a solution comprising two stators 32 instead of the single stator of the known solutions.

Moreover, alternative configurations for the rotor 31 and the stators 32 are possible. In fact, in the sweeper machine 1 the electric motor 3 has preferably internal rotor, wherein the stators 32 surround the rotor 31. In this solution, the stators 32 and their windings 34 are arranged outside the rotor 31.

In the sweeper machine 1 the electric motor 3 is preferably synchronous. In this case the rotation frequency of the rotor 31 is synchronized with that of the rotating magnetic field and of the supply voltage. Other configurations for the electric motor 3 are possible.

In the sweeper machine 1 each one of the stators 32 preferably comprises three windings **34** capable of inducing a magnetic field by the passage of current.

The current passing in the windings 34 is responsible for the interactions with the permanent magnets of the rotor 31, by generating the rotative motion of the rotor 31.

The hexa-phase system 30 comprises two inverter circuits **33,** each one connected to one of the stators 32, and each one mutually independent.

The two inverter circuits 33 are connected to the battery 35, which can have one single battery or two separate batteries, one for each inverter 33.

The inverter circuits 33 control the currents passing in the stators 32, so as to induce a magnetic field which will cause the rotor 31 to move.

In particular, each inverter 33 is suitable to send a three-phase current to the connected stator 32. In this way two three-phase currents are matched, one for each stator 32, so as to constitute the equivalent of a hexa-phase system.

In particular, in the sweeper machine 1, the voltages applied to the stators 32 are preferably less than 120 V in direct current, which represents the limit beyond which it is not possible to install high powers without having to change technique for installation, motion and maintenance of control elements and the battery significantly. The limit is established even by the rule EN 1175 2021 on forklifts, largely assimilable to the present application field.

In the sweeper machine 1 each one of the inverter circuits 33 preferably operates individually in case of failure of the other inverter circuit 33. The setting of the operation of the electric motor 3 with one single element, as three-phase motor, is regulated by software.

This solution allows the electric motor 3 to be able to continue to operate as three-phase motor when one of the two elements constituting it has a failure, since one of the two stators 32 would continue to operate. This solution can be denominated "*Get home*".

The sweeper machine 1 according to the invention achieves important advantages. In fact, the use of a hexa-phase brushless motor allows the sweeper machine 1 to be able to exploit high powers, thanks to high voltages and reduced currents, without exceeding the limit of 120 V in direct current, applied by the battery 35, as already anticipated, above which a different solution would become necessary, as per regulations, such as for example one single motor with mechanical differential or independent motors applied to the driving wheels.

Another advantage of this solution is the possibility of reducing the volumes with respect to the solution with two single and distinct motors. An additional advantage, in fact, is that the reduced dimensions and the reduced currents allow to facilitate the procedure of installing the motor, as well as to reduce the costs of the used materials.

This solution has further the advantage of halving the currents, analogously to what would happen in a solution with two separate motors, with respect to one single motor having equal power.

As said previously, the sweeper machine 1 has the advantage of being able to work regularly even under emergency conditions and in case of failures, when one of the two elements of the motor has a failure, by leaving the other element operating. This advantage makes that situations are avoided in which the sweeper machine remains still on the roadway in case of failures and allows to bring back the vehicle to storage. The invention may be subject to variants within the scope of the inventive concept defined by the claims.

Within such scope, all details can be replaced by equivalent elements and the materials, shapes and sizes can be any.

## Claims

1. Road sweeper machine (1) comprising:
- a vehicle (2) suitable for road transport and comprising an electric motor (3) of a brushless type,
- sweeping elements (4) connected to said vehicle (2) and suitable for removing waste on the ground,
- a collection system (5) for said waste placed at the bottom of said vehicle (2)
- a chamber (6) for containing said collected waste connected to said collection system (5),
and **characterised by**
- said electric motor (3) comprises a hexa-phase system (30),
- said hexa-phase system (30) comprising:
- a rotor (31) comprising a plurality of permanent type magnets
- two stators (32),
- two inverter circuits (33), each connected to one of said stators (32), and each mutually independent,
- each said inverter (33) being capable of sending a three-phase current to said connected stator (32).

2. Road sweeper machine (1) according to claim 1, wherein each of said stators (32) comprises three windings (34) capable of inducing a magnetic field by the passage of current.

3. Road sweeper machine (1) according to any one of the preceding claims, wherein said electric motor (3) is synchronous.

4. Road sweeper machine (1) according to any one of the preceding claims, wherein said electric motor (3) has an external rotor, wherein said rotor (31) surrounds said stators (32).

5. Road sweeper machine (1) according to any one of claims 1-3 wherein said electric motor (3) has an internal rotor, wherein said stators (32) surround said rotor (31).

6. Road sweeper machine (1) according to any one of the preceding claims, wherein each of said inverter circuits (33) operates individually in case of failure of the other of said inverter circuits (33).

7. Road sweeper machine (1) according to any one of the preceding claims, wherein the voltages applied to said stators (32) are less than 120 Vdc.

8. Road sweeper machine (1) according to any one of the preceding claims, comprising a single battery (35) configured to power both of said inverter circuits (33).

## Patentansprüche

1. Straßenkehrmaschine (1), umfassend:
- ein Fahrzeug (2), das für den Straßenverkehr geeignet ist und umfassend einen Elektromotor (3) vom bürstenlosen Typ,
- Kehrvorrichtungen (4), die mit dem Fahrzeug (2) verbunden sind und geeignet sind, Abfällen auf dem Boden zu entfernen,
- ein Sammelsystem (5) für die Abfälle, das am Boden des Fahrzeugs (2) angeordnet ist
- eine Kammer (6) zur Aufnahme der gesammelten Abfälle, die mit dem Sammelsystem (5) verbunden ist,
und **dadurch gekennzeichnet, dass**
- der Elektromotor (3) ein sechsphasiges System (30) umfasst,
- das sechsphasige System (30) umfassend:
- einen Rotor (31), umfassend eine Vielzahl von Permanentmagneten,
- zwei Statoren (32),
- zwei Wechselrichterschaltungen (33), die jeweils mit einem der Statoren (32) verbunden sind und die gegenseitig unabhängig sind,
- jeder der Wechselrichter (33) in der Lage ist, dem verbundenen Stator (32) einen Dreiphasen-Strom zu senden.

2. Straßenkehrmaschine (1) nach Anspruch 1, wobei jeder der Statoren (32) drei Wicklungen (34) umfasst, die in der Lage sind, durch den Stromübergang ein Magnetfeld zu induzieren.

3. Straßenkehrmaschine (1) nach einem der vorhergehenden Ansprüche, wobei der Elektromotor (3)ein Synchronmotor ist.

4. Straßenkehrmaschine (1) nach einem der vorhergehenden Ansprüche, wobei der Elektromotor (3) einen Außenrotor aufweist, wobei der Rotor (31) die Statoren (32) umgibt.

5. Straßenkehrmaschine (1) nach einem der Ansprüche 3, wobei der Elektromotor (3) einen Innenrotor aufweist, wobei die Statoren (32) den Rotor (31) umgeben.

6. Straßenkehrmaschine (1) nach einem der vorhergehenden Ansprüche, wobei jeder der Wechselrichterschaltungen (33) im Falle eines Ausfalls der jeweils anderen der Wechselrichterschaltungen (33) einzeln arbeitet.

7. Straßenkehrmaschine (1) nach einem der vorhergehenden Ansprüche, wobei die Spannungen, die an den Statoren (32) angelegt werden, weniger als 120 VDC betragen.

8. Straßenkehrmaschine (1) nach einem der vorhergehenden Ansprüche, umfassend eine einzige Batterie (35), die dazu konfiguriert ist, beide Wechselrichterschaltungen (33) zu versorgen.

## Revendications

1. Machine balayeuse de voirie (1) comprenant :
- un véhicule (2) adapté au transport routier et comprenant un moteur électrique (3) de type brushless,
- des éléments de balayage (4) connectés audit véhicule (2) et adaptés à l'enlèvement des déchets au sol,
- un système de collecte (5) pour lesdits déchets placés au fond dudit véhicule (2),
- une chambre (6) pour contenir lesdits déchets collectés connectée audit système de collecte (5),
et **caractérisée en ce que**
- ledit moteur électrique (3) comprend un système hexaphasé (30),
- ledit système hexaphasé (30) comprenant :
- un rotor (31) comprenant une pluralité d'aimants de type permanent,
- deux stators (32),
- deux circuits onduleurs (33), chacun connecté à l'un desdits stators (32), et chacun mutuellement indépendant,
- chacun desdits onduleurs (33) étant capable d'envoyer un courant triphasé audit stator (32) connecté.

2. Machine balayeuse de voirie (1) selon la revendication 1, dans laquelle chacun desdits stators (32) comprend trois enroulements (34) capables d'induire un champ magnétique par le passage du courant.

3. Machine balayeuse de voirie (1) selon l'une quelconque des revendications précédentes, dans laquelle ledit moteur électrique (3) est synchrone.

4. Machine balayeuse de voirie (1) selon l'une quelconque des revendications précédentes, dans laquelle ledit moteur électrique (3) a un rotor externe, dans laquelle ledit rotor (31) entoure lesdits stators (32).

5. Machine balayeuse de voirie (1) selon l'une quelconque des revendications 3, dans laquelle ledit moteur électrique (3) a un rotor interne, dans laquelle lesdits stators (32) entourent ledit rotor (31).

6. Machine balayeuse de voirie (1) selon l'une quelconque des revendications précédentes, dans laquelle chacun desdits circuits onduleurs (33) fonctionne individuellement en cas de défaillance de l'autre desdits circuits onduleurs (33).

7. Machine balayeuse de voirie (1) selon l'une quelconque des revendications précédentes, dans laquelle les tensions appliquées auxdits stators (32) sont inférieures à 120 VCC.

8. Machine balayeuse de voirie (1) selon l'une quelconque des revendications précédentes, comprenant une seule batterie (35) configurée pour alimenter les deux dits circuits onduleurs (33).
